# EUROPÄISCHE PATENTSCHRIFT

(11) **EP 4 228 224 B1**
(45) Veröffentlichungstag und Bekanntmachung des Hinweises auf die Patenterteilung: **03.04.2024**
(21) Anmeldenummer: 22156853.8
(22) Anmeldetag: 15.02.2022
(51) Int. Cl.: H04L 65/1076, H04L 65/1104, H04M 3/22, H04M 3/42

(54) **VERFAHREN ZUR NETZZENTRISCHEN VERIFIZIERUNG EINER RUFNUMMER IN EINEM TELEFONNETZ UND VERFAHREN ZUR ANRUF-ANREICHERUNG**
METHOD FOR NETWORK-CENTRIC VERIFICATION OF A TELEPHONE NUMBER IN A TELEPHONE NETWORK AND METHOD FOR CALL ENRICHMENT
PROCÉDÉ DE VÉRIFICATION CENTRÉE RÉSEAU D'UN NUMÉRO D'APPEL DANS UN RÉSEAU TÉLÉPHONIQUE ET PROCÉDÉ D'ENRICHISSEMENT D'APPEL

(43) Veröffentlichungstag der Anmeldung: 16.08.2023
(73) Patentinhaber: Deutsche Telekom AG, 53113 Bonn (DE)
(72) Erfinder: GUMANN, Patrick, 91275 Auerbach (DE); HABERKORN, Günter, 92662 Birgland / Schwend (DE)
(74) Vertreter: Vossius & Partner Patentanwälte Rechtsanwälte mbB

(56) Entgegenhaltungen:
- WO-A1-2007/036400
- US-A1- 2020 220 725

## Beschreibung

Die Erfindung betrifft ein Verfahren und System zur Verifizierung von Rufnummern und zur Anruf-Anreicherung. Insbesondere betrifft die Erfindung ein Verfahren und System zur Verifizierung einer gesendeten Rufnummer in einem Telekommunikationsnetzwerk, vorzugsweise dem Zielnetzwerk des Anrufs.

In dieser Beschreibung bezieht sich der Begriff "Anreicherung" auf das Anreichern eines Anrufes mit zusätzlichen Informationen. Für die Darstellung der zusätzlichen Informationen und/oder einer Teilmenge davon auf einem Endgerät wird ebenfalls der Begriff Anreicherung verwendet. Die Anreicherung kann bereits beim Anrufer erfolgen, in dem dieser bestimmte Informationen überträgt, vorzugsweise in einem SIP-Attribut.

Der Begriff "Anreicherung" umfasst erfindungsgemäß auch die Unterdrückung einer Rufnummer, weil auch hier dem Anruf eine Information hinzugefügt wird und diese Information ggf. beim Angerufenen zur Anzeige gebracht wird.

Vom Unterdrücken der Rufnummer ist das Unterdrücken des Anrufs zu unterscheiden. Letzteres beschreibt ein Abweisen des Anrufs ohne Nutzereingabe beim Angerufenen. Jedoch kann das Unterdrücken der Rufnummer zum Unterdrücken des Anrufs führen. Die Begriffe sind also eng miteinander verknüpft und werden in dieser Beschreibung, sofern nicht anderweitig gekennzeichnet oder dem Fachmann offensichtlich, synonym verwendet.

Weiter kann die Anreicherung durch einen Netzwerkanbieter in einem Telekommunikationsnetzwerk entlang der Service-Kette erfolgen. Dazu werden den ursprünglich vom Anrufer gesendeten Informationen weitere Informationen hinzugefügt, vorzugsweise in einem SIP-Attribut, besonders bevorzugt im CNAM Attribut. Mögliche Informationen, die durch einen Netzwerkbetreiber angereichert werden können, umfassen eines oder mehrere von: Name bzw. Firmenname; Foto bzw. Logo; und einen Status wie "verifiziert" oder "Missbrauchsverdacht".

Weiter kann die Anreicherung im Endgerät und/oder der Telekommunikations-, TK,-Anlage des Angerufenen erfolgen. Dort werden zusätzliche Informationen entweder lokal bezogen, vorzugsweise aus einem Telefonbuch oder einer ähnlichen Datenbank. Alternativ oder ergänzend können zusätzliche Information aus einer Datenbank in einem Netzwerk, vorzugsweise dem Internet, bezogen werden. Die zusätzlichen Informationen werden dann dem Anruf hinzugefügt, vorzugsweise basierend auf der übertragenen Rufnummer. Mögliche Informationen, die im Endgerät und/oder der TK-Anlage des Angerufenen angereichert werden können, umfassen eines oder mehrere von: Name bzw. Firmenname; postalische Adresse; E-Mail-Adresse; Webseite; Öffnungszeiten; und Foto bzw. Logo. Anders ausgedrückt alle Informationen aus Feldern, die üblicherweise in einem Telefonbuch des Endgeräts befüllt werden können.

Schließlich wird dann die angereicherte Information oder eine Teilmenge dem Nutzer auf dem Endgerät zur Anzeige gebracht. Alternativ oder ergänzend kann die angereicherte Information im Endgerät und/oder der TK-Anlage des Angerufenen weiterverarbeitet werden.

Im Nachfolgenden ist zwischen Authentifizierung und Verifizierung zu unterscheiden. Authentifizierung ist erfindungsgemäß definiert als ein Nachweis einer behaupteten Eigenschaft einer Entität, z.B. Rufnummerninhaber. Verifizierung ist definiert als Überprüfung, ob die erfolgte Authentifizierung gültig und/oder glaubhaft ist.

In dieser Beschreibung bezieht sich der Begriff Verifizierung auf die Überprüfung von mit einem Anruf gesendeten Informationen, vorzugsweise einer gesendeten Rufnummer. Die Überprüfung der gesendeten Rufnummer beinhaltet die Überprüfung, ob der Anrufer zum Senden der Rufnummer berechtigt ist. Insbesondere beinhaltet die Überprüfung der gesendeten Rufnummer die Überprüfung, ob der Anrufer auch Inhaber der Rufnummer ist. Es findet also eine Verifikation der Anrufer-Identität statt.

Das unerlaubte Senden einer falschen Rufnummer wird als sogenanntes Call ID Spoofing bezeichnet. Unternehmen aber auch Privatpersonen werden immer häufiger Opfer von Call ID Spoofing. In einem typischen Szenario verwenden Betrüger technische Mittel zum Vortäuschen einer angezeigten Rufnummer. Dieses Vortäuschen wird als "spoofen" bezeichnet.

Betrüger benutzen für das Spoofing eine erste Rufnummer, nachfolgend A-Rufnummer, welche dann bei dem Angerufenen, nachfolgend B-Teilnehmer, angezeigt wird. Der B-Teilnehmer nimmt also den Anruf in der Annahme entgegen, mit dem A-Teilnehmer, d.h. dem rechtmäßigen Inhaber der A-Rufnummer, verbunden zu sein.

Die Betrüger geben sich nachfolgend als Mitarbeiter des Unternehmens, d.h. A-Teilnehmer, aus, um an weitere Informationen zu kommen. Durch die so erhaltenen Informationen erleidet sowohl der angerufene B-Teilnehmer als auch der Rufnummerninhaber, d.h. A-Teilnehmer, einen Schaden.

Es existieren mehrere Telekommunikations-Netze, die miteinander verbunden sind. Anrufe von Teilnehmern aus einem Telekommunikationsnetzwerk zu einem Teilnehmer in einem anderen Telekommunikationsnetzwerk sind möglich. Die Telekommunikationsnetzwerke können von unterschiedlichen Anbietern betrieben werden.

Da ein Anruf an den B-Teilnehmer aus einem anderen Telekommunikations-Netz kommen kann, welches nicht vom gleichen Anbieter wie das Telekommunikationsnetzwerk des B-Teilnehmer betrieben wird, ist es aktuell nicht möglich, die Legitimität der übermittelten A-Rufnummer zu verifizieren.

Es kann folglich nicht unterschieden werden, ob die Anzeige bzw. das Senden der A-Rufnummer rechtens ist, oder ob ein Betrüger die Rufnummer unerlaubt zur Anzeige bringt. Das beschriebene Betrugsverfahren wird auch als Social Engineering bezeichnet.

Das Bundesamt für Sicherheit in der Informationstechnik, BSI, definiert Social Engineering wie folgt:
"Beim Social Engineering werden menschliche Eigenschaften wie Hilfsbereitschaft, Vertrauen, Angst oder Respekt vor Autorität ausgenutzt, um Personen geschickt zu manipulieren. Cyber-Kriminelle verleiten das Opfer auf diese Weise beispielsweise dazu, vertrauliche Informationen preiszugeben, Sicherheitsfunktionen auszuhebeln, Überweisungen zu tätigen oder Schadsoftware auf dem privaten Gerät oder einem Computer im Firmennetzwerk zu installieren."

Nach Angaben des Branchenverbands Bitkom entstehen Unternehmen in Deutschland allein durch Social Engineering jährlich Schaden in Millionenhöhe. 27 % der von Bitkom zu Cyberangriffen befragten Unternehmen gaben an, schon einmal telefonisch kontaktiert worden zu sein. Zudem wuchs Spoofing als Art der Cyberangriffe in den letzten beiden Jahren von 8 % auf 20 % aller Cyberangriffe.

Neben dem Bedarf eines Call ID Spoofing - Schutzes, besteht gerade bei Call-Centern großes Interesse, den Firmennamen und ein Logo am Endgerät des B-Teilnehmers zur Anzeige zu bringen. Anstelle einer unbekannten Rufnummer sieht der Angerufene so direkt, wer ihn versucht anzurufen. Diese Zusatzinformationen werden nachfolgend als Anreicherung des Anrufs bezeichnet.

Unter anderem die Bankenbranche rechnet mit einer deutlich gesteigerten Anruf-Akzeptanzrate und ist bereits auf der Suche nach einem Produkt, welches sowohl Spoofing verhindert als auch eine Anreicherung des Anrufs ermöglicht.

Die Internationale Patentanmeldung WO2007/036400 ist weiterer Stand der Technik zum Thema Vermeidung von Spam over Internet Telephony (SPIT).

Es fehlt an einer Lösung, mit der sichergestellt wird, dass nur bei verifizierten Anrufen die A-Rufnummer übermittelt wird und bei nicht-verifizierten Anrufen die A-Rufnummer unterdrückt wird.

Bei bisherigen Lösungsansätzen wird immer ein zweiter Kanal benötigt oder die Authentifizierung erfolgt beim Diensteanbieter des A-Teilnehmers, nicht aber direkt im Endgerät / der TK-Anlage des A-Teilnehmers. Mit anderen Worten, der Netzbetreiber des A-Teilnehmers bestätigt, dass es sich um den rechtmäßigen Rufnummerninhaber handelt. Diese Information wird anschließend vom Netzbetreiber des B-Teilnehmers abgerufen, welcher die Information an den B-Teilnehmer weiterreicht.

Es findet in der Regel immer nur eine Anreicherung (bspw. mit einer Warnung) statt, es kommt aber nicht zu einer Rufnummer-Unterdrückung, welche jegliche Anreicherung durch bestehende Telefonbucheinträge am Endgerät des B-Teilnehmers verhindert.

Darüber hinaus werden entweder nur ein Name ohne weitere Details und Bilder angereichert, oder es findet lediglich eine temporäre Anreicherung mit Grafiken und weiteren Informationen zum A-Teilnehmer statt.

Für Letzteres ist eine Internetverbindung vor Call-Aufbau erforderlich, welche negative Auswirkungen auf die Call-Setup-Time hat. Ferner verschwindet nach wenigen Minuten oder Stunden diese Art der Anreicherung wieder und ist in der Anrufhistorie nicht mehr sichtbar.

Letzteres dient der Sicherheit. Es könnte sonst ein gespoofter Anruf folgen, welcher dann auch angereichert werden würde, da keine Unterdrückung von nicht-verifizierten Anrufen vorgenommen wird.

Es fehlt also an einer dauerhaften Anreicherung von allen relevanten Kontaktdetails des A-Teilnehmers. Zur Anreicherung, wie oben definiert, im Rahmen dieser Erfindung zählen eines oder mehrere von Anrufer-Name, Logo/Bild, Webseite, Adresse und weiteren Informationen.

Die oben beschriebenen Aufgaben werden durch den Gegenstand der beigefügten unabhängigen Patentansprüche gelöst. Die abhängigen Patentansprüche beziehen sich auf weitere Aspekte der Erfindung.

Eine Ausführungsform der Erfindung betrifft ein Verfahren zur netzzentrischen Verifizierung einer Rufnummer in einem Telefonnetz, wobei eine Anrufereinheit eine erste Rufnummer sendet und ein Session Initiation Protocol, SIP,-Attribut mit einer Identitätsinformation beschreibt, wobei eine Komponente des Telefonnetzes die gesendete erste Rufnummer auf Basis der Identitätsinformation überprüft, und falls das Überprüfungsergebnis positiv ist, die Übertragung der ersten Rufnummer im Telefonnetz zulässt; und falls das Überprüfungsergebnis negativ ist, die Übertragung der ersten Rufnummer im Telefonnetz unterdrückt.

In einer bevorzugten Ausführungsform der Erfindung wird zum Unterdrücken der Übertragung der ersten Rufnummer das Calling Line Identification Restriction, CLIR,-Merkmal verwendet.

In einer bevorzugten Ausführungsform der Erfindung ist das SIP-Attribut vorzugsweise ein Identity Attribut. Alternativ ist das SIP-Attribut ein UserAgent oder Calling Name Delivery, CNAM, Attribut.

In einer bevorzugten Ausführungsform der Erfindung beruht die Überprüfung der gesendeten ersten Rufnummer auf Basis der Identitätsinformation auf einem zuvor abgestimmten kryptografischen Verfahren, und das kryptografische Verfahren basiert auf mindestens einem von: ein Einmalpasswort, eine digitale Signatur, oder einen Hash-Wert.

In einer bevorzugten Ausführungsform der Erfindung wird, falls das Überprüfungsergebnis negativ ist, eine Warnung im Calling Name Delivery, CNAM, Attribut angereichert; und/oder falls das Überprüfungsergebnis positiv ist, wird eine Information im Calling Name Delivery, CNAM, Attribut angereichert.

In einer bevorzugten Ausführungsform der Erfindung wird eine netzzentrische Verifizierung einer Rufnummer gemäß einer der voranstehenden Ausführungsformen durchgeführt, wobei ein zusätzliches Telefonbuch lokal, vorzugsweise offline, im Endgerät und/oder einer Telekommunikationsanlage des Angerufenen hinterlegt ist, und wobei bei positiver Verifikation die Anreicherung auf Basis eines Eintrags aus dem zusätzlichen Telefonbuch durchgeführt wird.

In einer bevorzugten Ausführungsform der Erfindung ist das zusätzliche Telefonbuch in einer Applikation, App, mit Telefonbuchfunktion hinterlegt ist, welche vorzugsweise eine vom Netzwerkbetreiber zur Verfügung gestellte App , und eine Erweiterung des Betriebssystems des Endgeräts und/oder der Telefonanlage ist konfiguriert, auf Basis eines Eintrags aus dem zusätzlichen Telefonbuch anzureichern.

Eine Ausführungsform der Erfindung betrifft ein System zur netzzentrischen Verifizierung einer Rufnummer in einem Telefonnetz, wobei eine Anrufereinheit konfiguriert ist, eine erste Rufnummer zu senden und ein Session Initiation Protocol, SIP,-Attribut mit einer Identitätsinformation zu beschreiben, wobei eine Komponente des Telefonnetzes konfiguriert ist, die gesendete erste Rufnummer auf Basis der Identitätsinformation zu überprüfen. Falls das Überprüfungsergebnis positiv ist, ist die Komponente konfiguriert, die Übertragung der ersten Rufnummer im Telefonnetz zuzulassen; und, falls das Überprüfungsergebnis negativ ist, die Übertragung der ersten Rufnummer im Telefonnetz zu unterdrücken.

Eine Ausführungsform der Erfindung betrifft eine Vorrichtung zur Datenverarbeitung, umfassend Mittel zur Ausführung der Schritte des Verfahrens nach einer voranstehenden Ausführungsformen in einer Anrufereinheit.

Eine Ausführungsform der Erfindung betrifft eine Vorrichtung zur Datenverarbeitung, umfassend Mittel zur Ausführung der Schritte des Verfahrens nach einer voranstehenden Ausführungsformen in einer Komponente des Telefonnetzes.

Eine Ausführungsform der Erfindung betrifft ein Computerprogramm, umfassend Befehle, die bei der Ausführung des Programms durch einen Computer diesen veranlassen, das Verfahren nach einer voranstehenden Ausführungsformen in einer Anrufereinheit oder in einer Komponente des Telefonnetzes auszuführen.

Eine Ausführungsform der Erfindung betrifft einen computerlesbaren Datenträger, auf dem das voranstehende Computerprogramm gespeichert ist.

Es ist ein Aspekt der Erfindung, dass eine als Session Initiation Protocol, SIP,-Attribut gesendete Information genutzt wird, um im Zielnetz und/oder einem Transitnetz des Anrufs eine Verifizierung der Rufnummer durchzuführen. Für die Verifizierung werden kryptografisches Verfahren, vorzugsweise ein OTP, eine digitale Signatur, oder ein Hash-Wert, verwendet. Bei erfolgter Verifizierung bleibt die Rufnummerninformation erhalten. Bei negativem Verifizierungsergebnis wird die Rufnummer unterdrückt, vorzugsweise durch das CLIR Merkmal. Hierbei wird zur Unterdrückung der Anrufernummer das FROM Field im SIP-Header auf "anonymous" gesetzt.

Es ist ein Aspekt der Erfindung, dass die A-Rufnummer in mehreren SIP-Attributen übermittelt wird, aber es wird nur jenes Attribut erfindungsgemäß modifiziert, welches für die Anzeige am Endgerät des B-Teilnehmers verantwortlich ist. Vorzugsweise erfolgt die Unterdrückung der Anrufernummer durch Setzen des FROM Fields im SIP-Header auf "anonymous". Eine Notruffunktionalität wird so, anders als bei der Modifikation des P-Asserted-Identity Fields, nicht beeinträchtigt.

Es ist ein weiterer Aspekt der Erfindung, dass beim Angerufenen eine App existiert, die ein Telefonbuch bereithält, welches vom Netzwerkanbieter gepflegt wird. Ferner wird dann auf Basis des Telefonbuchs und der Verifizierungsinformation im Endgerät des Nutzers eine Anreicherung des Anrufs durchgeführt.

Es ist ein Aspekt der Erfindung, dass sich der A-Teilnehmer selbst ausweist, bspw. anhand von einer oder mehreren digitalen Signaturen in SIP-Attributen. Der Netzbetreiber des B-Teilnehmers überprüft die Gültigkeit der jeweiligen Signatur. Der Netzbetreiber des A-Teilnehmers muss den Anruf nur "durchreichen", aber keine Authentifizierung durchführen.

In einem Aspekt der Erfindung authentifiziert der Urspungsnetzbetreiber den Kunden als Rufnummerninhaber und der Zielnetzbetreiber verifiziert die Gültigkeit der Authentifizierung. Mit anderen Worten: der A-Netzbetreiber beschreibt ein SIP-Attribut und bestätigt damit, dass es sich um den rechtmäßigen Rufnummerninhaber handelt, der B-Netzbetreiber überprüft/verifiziert die Gültigkeit des gesetzten SIP-Attributs.

In einem Aspekt der Erfindung wird direkt im Endgerät/der TK-Anlage anhand einer digitalen Signatur o.ä. der Nachweis erbracht, dass die Rufnummer rechtmäßig übermittelt wird. Der Ursprungsnetzbetreiber wird für diesen Prozess nicht benötigt.

In einem Aspekt der Erfindung wird ein Anruf-Grund übermittelt, vorzugsweise direkt nach der digitalen Signatur, d.h. im gleichen SIP-Attribut. Diese Information könnte vom Zielnetzbetreiber nach positiver Verifikation in ein SIP-Attribut geschrieben werden, vorzugsweise in das CNAM-Attribut. Der B-Teilnehmer würde in diesem Fall von einer unmittelbaren Anreicherung des Anrufgrunds profitieren. So könnte beispielsweise ein "Ihr Vertrag endet bald" zur Anzeige gebracht werden. Der B-Teilnehmer weiß so schon vor Anrufannahme den Grund des Anrufs, oder sieht die Information in der Anruferliste, im Falle eines verpassten Anrufs.

### Kurze Beschreibung der Abbildungen

In den Abbildungen zeigt:
- Fig. 1: eine schematische Darstellung des Verfahrensablaufs in einer Ausführungsform der Erfindung ohne Transitnetzwerk;
- Fig. 2: eine schematische Darstellung des Verfahrensablaufs in einer Ausführungsform der Erfindung mit Transitnetzwerk und positiver Verifikation;
- Fig. 3: eine schematische Darstellung des Verfahrensablaufs in einer Ausführungsform der Erfindung mit Transitnetzwerk und negativer Verifikation;
- Fig. 4: eine Darstellung des Verfahrensablaufs als Blockbild; und
- Fig. 5: ein Ablaufdiagramm einer Ausführungsform der Erfindung.

### Detaillierte Beschreibung der Abbildungen

Nachfolgend werden Ausführungsformen der vorliegenden Erfindung beschrieben. Es wird festgehalten, dass bestimmte Aspekte, Elemente, und Details der jeweiligen beschriebenen Ausführungsformen auch in anderen Ausführungsformen vorhanden sein können, sofern das Vorhandensein nicht explizit ausgeschlossen wird oder ein Ausschluss für den Fachmann offensichtlich ist. Insbesondere wird jeder Aspekt nur dann im Detail erläutert, wenn er zu ersten Mal erwähnt wird. Auf eine wiederholte Beschreibung in nachfolgenden Ausführungsformen wird verzichtet.

Es ist ein Vorteil der vorliegenden Erfindung, dass Anrufe verifiziert werden können, ohne auf den Netzbetreiber des A-Teilnehmers angewiesen zu sein.

Nur nach erfolgreicher Verifizierung darf die A-Rufnummer übermittelt werden und kann durch bereits bestehende Telefonbuch-Einträge am Endgerät des B-Teilnehmers angereichert werden. In allen anderen Fällen wird die Rufnummer unterdrückt und so ein Call ID Spoofing verhindert.

Nachfolgend werden die Begriffe "Adressbuch" und "Telefonbuch" als äquivalent angenommen. Während von der Anreicherung nur Nutzer mit Eintrag im Adressbuch oder einer Erweiterung des Adressbuchs profitieren, greift der Spoofing-Schutz bei allen B-Teilnehmern, unabhängig ob ein Festnetz- oder Mobilfunkendgerät angerufen wird.

Nachfolgend wird das Verfahren gemäß einer Ausführungsform der Erfindung aus Sicht der jeweiligen Teilnehmer beschrieben:

### A-Teilnehmer:

Ein Endgerät und/oder eine Telekommunikations-Anlage des A-Teilnehmers beschreibt mindestens ein Session Initiation Protocol-Attribut, SIP-Attribut, vorzugsweise Identity, Calling Name Delivery, CNAM, und/oder UserAgent. Alternativ oder ergänzend kann das Beschreiben des SIP-Attributs durch eine Software oder App beim A-Teilnehmer erfolgen.

Kriterien für die Auswahl eines geeigneten SIP Attributes sind eines oder mehrere von:
a) frei-beschreibbar vom A-Teilnehmer;
b) ausreichende beschreibbare Länge in Bezug auf eine benötigte Zeichenanzahl für den kryptografischen Schlüssel;
c) keine Manipulation durch Carrier in der Servicekette;
d) durchgehend verfügbar in der Servicekette; und/oder
e) kein Einfluss auf das Routing o.ä.

Beim Beschreiben verwendet der A-Teilnehmer ein zuvor abgestimmtes kryptografisches Verfahren. Das kryptografische Verfahren kann eine digitale Signatur und/oder ein Einmalpasswort, OTP, umfassen. Vorzugsweise wird die digitale Signatur mit einem private key erstellt, entsprechend kann die Gültigkeit der Signatur vorzugsweise mit einem public key erfolgen.

Die digitale Signatur umfasst vorzugsweise mindestens eines von: die A-Rufnummer, die B-Rufnummer und einen Zeitstempel des Anrufs. Eine Kombination aus A-Rufnummer, B-Rufnummer und einem Zeitstempel des Anrufs ist eine bevorzugte Ausführungsform. Alternativ oder ergänzend kann eine Hash-Funktion mit fester Ausgabelänge genutzt werden.

In einer bevorzugten Ausführungsform der Erfindung wird die Kombination aus A-Rufnummer, B-Rufnummer und Zeitstempel digital signiert, welches vorzugsweise nur mit dem private key möglich ist. Dadurch ist die Signatur "einzigartig". Falls nur die A-Rufnummer signiert wird, ist die Signatur bei jedem Anruf identisch und schon vorher bekannt. Jeder könnte die Signatur daher nutzen und sich als der Rufnummerninhaber ausgeben. Es ist daher wichtig alle drei Attribute in Kombination heranzuziehen, damit keine "Reply"-Angriffe möglich sind.

Das kryptografische Verfahren wird verwendet, um nachzuweisen, dass der A -Teilnehmer der rechtmäßige Rufnummerninhaber der anzuzeigenden bzw. gesendeten A-Rufnummer ist. Das genaue Verfahren wird im Vorfeld abgestimmt, vorzugsweise mit den Netzbetreibern, besonders bevorzugt dem Zielnetzbetreiber.

Es ist ein Vorteil der vorliegenden Erfindung, dass kein zusätzlicher Kanal benötigt wird. Die Verifizierung kann also von einem B-Netzbetreiber durchgeführt werden, ohne dass dieser auf einen anderen Netzbetreiber angewiesen ist. Der B-Netzbetreiber kann so die Sicherheit für seine Kunden erhöhen.

### Ursprungsnetz (A-Netz):

Das Ursprungsnetz, d.h. das Netz, in dem der A-Teilnehmer den Anruf platziert, nimmt nicht am Verifikations- und/oder Anreicherungsprozess teil. Es ist jedoch notwendig, dass der Betreiber des Ursprungsnetzes das verwendete SIP-Attribut nicht manipuliert.

Hier sei festgehalten, dass das Ursprungsnetz und das Zielnetz identisch sein können. In dieser Ausführungsform, welche später detailliert beschrieben wird, führt der Netzbetreiber sowohl die Ursprungsnetz-Schritte als auch die Zielnetz-Schritte durch.

Im Gegensatz zu dem erfindungsgemäßen Verfahren wird bei dem STIR/SHAKEN Prinzip (Secure Telephony Identity Revisited, STIR, und Signature-based Handling of Asserted information using toKENs, SHAKEN) bereits beim Ursprungsnetzanbieter die Authentifizierung durchgeführt.

Mit anderen Worten, bei STIR/SHAKEN erfolgt die Authentifizierung beim Netzbetreiber der A-Teilnehmers. Die Verifikation erfolgt beim Diensteanbieter des B-Teilnehmers und es findet eine Anreicherung des Anrufs statt.

In den Ausführungsformen der Erfindung wird von der TK-Anlage und/oder dem Endgerät des A-Teilnehmers in bereits bestehende SIP-Attribute eine "Signatur" codiert.

Der Netzbetreiber des A-Teilnehmers ist nicht am Verifikationsprozess beteiligt, erst der Netzbetreiber des B-Teilnehmers verifiziert diese "Signatur". Sollte die Verifikation nicht möglich sein, wird die Rufnummer unterdrückt und nicht beim B-Teilnehmer zur Anzeige gebracht. Zusätzlich kann der B-Teilnehmer über das CNAM Attribut gewarnt werden. Somit kann, sobald der A-Teilnehmer und Zielnetzbetreiber die "Signatur" abstimmen, unabhängig von den anderen Netzbetreibern in der Servicekette eine Verifikation der rechtmäßigen Nutzung der A-Rufnummer garantiert werden.

### Zielnetz:

Eine Komponente des Zielnetzes, welche vorzugsweise am Anrufaufbau beteiligt ist, verifiziert den Anruf anhand eines kryptografischen Verfahrens. Dazu wird vorzugsweise eine digitale Signatur, ein OTP, Hash-Werte oder Vergleichbares verwendet. Das Verfahren entspricht dem Gegenstück zu dem beim A-Teilnehmer verwendeten. Kann im Zielnetz nachgewiesen werden, dass die A-Rufnummer tatsächlich dem A-Teilnehmer zugeordnet werden kann, so wird die A-Rufnummer übermittelt. Ist dies nicht der Fall, wird die Rufnummer unterdrückt, vorzugsweise wird dazu das Calling Line Identification Restriction, CLIR, Merkmal verwendet.

Die oben genannte Komponente kann als ein Verification Service ausgeführt sein, d.h. als eigenständiges Netzelement. Alternativ oder ergänzend kann die Komponente auch an einer bereits vorhandenen Komponente ausgeführt sein. Vorzugsweise ist die Komponente an/in einem Element wie einem telephony application server, TAS, oder einem mobile telephony application server, MMTel-AS, ausgeführt.

Es ist somit ein Grundprinzip der Erfindung, dass existierende frei-beschreibbare SIP-Attribute für die Verifizierung des A-Teilnehmers durch ein kryptografisches Verfahren im Kernnetz des Zielnetzbetreibers verwendet werden.

In einer weiteren Ausführungsform der Erfindung wird neben der Unterdrückung der Rufnummer durch das CNAM-Feld eine Warnung angereichert. Es wird bei ungültiger Verifizierung aber keine Rufnummer zur Anzeige gebracht.

Auch bei erfolgreicher Verifizierung kann ergänzend eine Anreicherung über das CNAM-Feld stattfinden. In diesem Fall wird vorzugsweise der Name des A-Teilnehmers ergänzt, welcher dann auch am Endgerät des B-Teilnehmers zu Anzeige gebracht werden kann.

In einer weiteren Ausführungsform der Erfindung wird eine digitale Signatur genutzt. Das Verfahren wird mit mindestens einem, vorzugsweise mehreren (Ziel-)Netzbetreibern, abgestimmt. Jeder Netzbetreiber prüft anhand eines Public Keys die Gültigkeit der Signatur und verifiziert so die A-Rufnummer.

Ist keine Signatur vorhanden, gilt die Prüfung als nicht erfolgreich und die A-Rufnummer wird unterdrückt, da diese nicht erfolgreich verifiziert werden konnte.

In einer weiteren Ausführungsform der Erfindung ist die beschriebene Lösung nicht auf einen Netzbetreiber beschränkt. Der A-Teilnehmer kann eine Kooperation mit allen Netzbetreibern eines Landes eingehen. Dadurch wird sichergestellt, dass innerhalb des Landes nur bei verifizierten Anrufen die A-Rufnummer angezeigt wird.

In einer weiteren Ausführungsform der Erfindung werden alternativ oder ergänzend auch Transitverkehre überprüft. Sobald ein am Verfahren teilnehmender Netzbetreiber in der Service Kette eines Anrufs ist, wir eine Verifizierung vorgenommen. Der Spoofing-Schutz würde in diesem Fall auch greifen, selbst wenn es sich nicht um den Zielnetzbetreiber handelt und der B-Teilnehmer in ein Drittnetz eingebucht ist. Auch im Roaming-Fall würde so eine Verifizierung stattfinden.

### B-Teilnehmer:

In einer weiteren Ausführungsform der Erfindung reichert das Telefonbuch des B-Teilnehmers die Darstellung des - zuvor verifizierten - eingehenden Anrufs an. Ist die A-Rufnummer des eingehenden Anrufs unterdrückt, findet keine Anreicherung statt und der B-Teilnehmer, sowie der rechtmäßige Rufnummerninhaber der A-Rufnummer profitieren vom Spoofing-Schutz.

Die Möglichkeit der Rufnummernunterdrückung im Betrugsfall erfordert keine Erweiterungen am Endgerät des B-Teilnehmers und im verifizierten Fall sind die nötigen Informationen zur Anreicherung bereits im Telefonbuch und/oder einer Applikation vorhanden, wodurch keine Internetverbindung während des Call-Aufbaus benötigt und der Call-Aufbau beschleunigt wird.

In allen Ausführungsformen kann bei den Endgeräten des B-Teilnehmers zwischen Mobiltelefonen und Festnetztelefonen unterschieden werden.

In einem mobilen Endgerät wird vorzugsweise eine App mit einem Framework, vorzugsweise CallKit unter iOS, oder ein Eintrag im Adressbuch verwendet. Auch andere Betriebssysteme für Endgeräte bieten entsprechende framewoks und API an. In einem Android System kann das Android Telecom framework verwendet werden. Ferner stehen dort die ConnectionService API und InCallService API zur Verfügung.

In einem Festnetz-Endgerät wird ein eingebundenes Online-Telefonbuch verwendet, welches regelmäßig aktualisiert und vom Netzbetreiber bereitgestellt wird. Eine Möglichkeit der Einbindung ist bei den meisten Router Herstellern vorhanden.

Alternativ oder ergänzend kann auch ein manueller Eintrag im Telefonbuch zur Anzeige gebracht werden. Letzteres aber nur im verifizierten Fall, da andernfalls wie beschreiben erfindungsgemäß die Rufnummer unterdrückt ist.

In einer Ausführungsform der Erfindung wird im Fall einer CNAM-Anreicherung diese zur Anzeige gebracht.

Alle beschriebenen Ausführungsformen bietet aufgrund der Rufnummer-Unterdrückung Schutz vor Social-Engineering und dieser Effekt ist auf allen Endgeräten ohne vorherige Konfigurationsanpassungen möglich.

Zur Anreicherung des Anrufs nach erfolgter Verifizierung im Zielnetz ist ein temporärer Telefonbucheintrag möglich. Dieses Prinzip wird bereits eingesetzt. Jedoch ist bei dieser Lösung ein relativ kurzer Zeit-Slot zur Hinterlegung zu beachten. Ferner ist kein direkter Abgleich zwischen mehreren Endgeräten, wie Wearable, Computer und Telefon möglich. Weiter ergeben sich unnötige Verzögerungen beim Rufaufbau. Weiter ist eine Internetverbindung vor dem Rufaufbau erforderlich. Weiter ist eine falsche Darstellung in der Anrufliste möglich. Die Verwendung der vorliegenden Erfindung beseitigt die vorgenannten Nachteile, indem auf ausschließlich auf eine Inbound-Übermittlung (bspw. CNAM) oder bereits vorhandene "Anreicherungsinformationen" am Endgerät zurückgegriffen wird.

Alternativ ist ein persistenter Eintrag im Telefonbuch möglich. Allerdings wird aktuell damit im Falle von Call-ID Spoofing ein eingetragener Anrufer als verifizierter Anruf dargestellt und es besteht keine Möglichkeit zur Aktualisierung. Die Verwendung der vorliegenden Erfindung beseitigt die vorgenannten Nachteile.

In einer Ausführungsform der Erfindung wird eine netzzentrische Verifizierung durchgeführt. Nur verifizierte Anrufe dürfen eine bestimmte Nummer als Attribut beinhalten. Nichtverifizierte Anrufe werden anonymisiert, vorzugsweise mit dem CLIR Merkmal.

In einer Ausführungsform der Erfindung wird ein Telefonbuch lokal, vorzugsweise offline, im Endgerät des B-Teilnehmers hinterlegt. Zur Hinterlegung wird vorzugsweise eine App mit Telefonbuchfunktion verwendet, vorzugsweise eine vom Netzwerkbetreiber zur Verfügung gestellte App. Es werden vorzugsweise regelmäßige Aktualisierungen des Telefonbuchs, vorzugsweise täglich oder wöchentlich, durchgeführt.

Alternativ oder ergänzend kann auch eine andere App genutzt werden, d.h. eine App, die von einem Drittanbieter betrieben wird. In einer Ausführungsform der Erfindung wird eine App einer Bank genutzt, vorzugsweiser einer Bank welche, als A-Teilnehmer, den Kunden mit Banking-App, als B-Teilnehmer, anrufen möchte. Der Netzbetreiber des B-Teilnehmers garantiert eine Übermittlung der A-Rufnummer nur, wenn die Prüfung erfolgreich war. Die App kann daher jeden eingehenden Anruf, welcher die A-Rufnummer der Bank enthält, anreichern.

In einer Ausführungsform der Erfindung wird das zusätzliche Telefonbuch "ausgeblendet" und hat keinen Einfluss auf die Übersichtlichkeit des primären Telefonbuchs des Nutzers. Für die Implementierung werden Erweiterungen in iOS, Android und/oder weiteren Betriebssystemen zur Anreicherung von Anrufen genutzt.

Es ist vorteilhaft, dass der Eintrag zur Anreicherung bereits vor dem Anruf in der App hinterlegt ist und ohne Internetverbindung angereichert werden kann. Eine beispielhafte Erweiterung unter iOS ist das Framework CallKit.

In einer Ausführungsform der Erfindung ist für die vorgesehene netzzentrische Verifizierung eine Komponente, vorzugsweise im Zielnetz, erforderlich, welche am Call-Aufbau beteiligt ist. In einer Ausführungsform der Erfindung prüft ein Regelwerk die SIP-Attribute und entscheidet über das weitere Call-Handling. Ist der Anrufer verifiziert, darf die Rufnummer übermittelt werden. Ist der Anrufer nicht verifiziert, wird das CLIR-Merkmal zum Unterdrücken der Rufnummer verwendet.

In einer primären Ausführungsform der Erfindung nutzen der A-Teilnehmer und der B-Teilnehmer beide das Telekommunikationsnetzwerk des gleichen Netzbetreibers.

Eine Komponente, welche am Call-Aufbau beteiligt ist, verifiziert den Anruf anhand zuvor definierter Regeln. Kann nachgewiesen werden, dass die A-Rufnummer tatsächlich dem A-Teilnehmer zugeordnet werden kann, so wird diese übermittelt. Das Telefonbuch des B-Teilnehmers reichert die Darstellung des eingehenden Anrufs an.

Missbraucht ein anderer Kunde des Netzbetreibers die A-Rufnummer oder kommt der Anruf von anderen Carriern in das Telekommunikationsnetzwerk, ohne dass bspw. anhand einer digitalen Signatur nachgewiesen werden kann, dass der Anrufer das Recht an der Anrufernummer hat, so wird die Rufnummer unterdrückt, vorzugsweise mit dem CLIR-Merkmal.

Hier ergibt sich ein zusätzlicher Vorteil für alle Nutzer, alle nicht-verifizierten Anrufe werden anonymisiert und damit auch keine gespooften A-Rufnummern am Endgerät des Kunden (B-Teilnehmer) zur Anzeige gebracht.

In einer sekundären Ausführungsform der Erfindung nutzt nur der B-Teilnehmer das Telekommunikationsnetzwerk des Netzbetreibers mit Verifikation.

In den Ausführungsformen der Erfindung ist eine zusätzliche Software und/oder Hardware beim A-Teilnehmer, d.h. dem Anrufer, erforderlich, um das SIP-Attribut zu beschreiben. Eine Komponente, welche am Call-Aufbau beteiligt ist, verifiziert den Anruf anhand einer digitalen Signatur, o. ä. vgl. oben.

Kann nachgewiesen werden, dass die A-Rufnummer tatsächlich dem A-Teilnehmer zugeordnet werden kann, so wird diese übermittelt. Das Telefonbuch des B-Teilnehmers reichert die Darstellung des eingehenden Anrufs an.

Nachfolgend werden Ausführungsformen der Verifizierung diskutiert:
a) Eine Digitale Signatur wird mit einem privaten Schlüssel des A-Teilnehmers, der ein rechtmäßiger Rufnummerninhaber ist, erzeugt. Mit einem öffentlichen Schlüssel kann anschließend die Authentizität bestätigt werden. Vorzugsweise macht ein Zeitstempel die Signatur auch bei wiederholten Anrufen eindeutig.
b) Ein One-Time-Password, OTP, hat eine Gültigkeit von wenigen Sekunden und kann nur vom A-Teilnehmer, der ein rechtmäßiger Rufnummerninhaber ist, und dem Zielnetz erzeugt werden. Eine Komponente im Zielnetz prüft daher die A-Rufnummer und verifiziert die Korrektheit des OTPs.
c) Sollte eine Limitierung der Zeichenanzahl die Nutzung einer digitalen Signatur unmöglich machen, so ist eine Nutzung einer Hash-Funktion mit fester Ausgabelänge als Verifikationsmerkmal möglich. Den Input der Hash-Funktion würden dabei vorzugsweise die A-Rufnummer, die B-Rufnummer, der Zeitstempel und ein Shared Key darstellen. Der Shared Key ist nur dem rechtmäßigen Rufnummerninhaber und dem Ziel- bzw. Transitnetzbetreiber, d.h. dem Netzbetreiber, welcher die Verifikation durchführt, bekannt. Der Zeitstempel ist entscheidend, damit der Hash-Wert eindeutig ist und keine Wiederholungsangriffe möglich sind.

Stimmt der in einer Komponente des Zielnetzwerks berechnete Hash-Wert mit dem übermittelten Hash-Wert überein, gilt die A-Rufnummer als verifiziert.

Dem Fachmann ist erkenntlich, dass die Verwendung eines OTP einen sicheren Übertragungsweg erfordert. Eine zusätzliche Verschlüsselung ist vorteilhaft. Das OTP hat eine Gültigkeit von wenigen Sekunden und kann in der Service-Kette von einem Angreifer abgegriffen werden und in der kurzen Zeit der Gültigkeit für Spoofing Anrufe genutzt werden. Daher gilt es das OTP evtl. anderweitig abzusichern, bei einer digitalen Signatur besteht dieses Problem nicht.

An dieser Stelle wird auf eine weitere Ausführungsform hingewiesen, welche in dem speziellen Anwendungsfall anzuwenden ist, in dem der A-Teilnehmer auch im Netz des B-Teilnehmers, d.h. dem Telekommunikationsnetzwerk, welches die digitale Signatur prüft, angemeldet ist. Hier kann die Überprüfung entweder anhand der digitalen Signatur oder anhand eines bereits existierenden Authentifizierungsprozesses erfolgen. Sobald sich der A-Teilnehmer am Telekommunikationsnetzwerk anmeldet, weiß der Netzbetreiber, um welchen Kunden es sich handelt und welche Rufnummern dieser Kunde verwenden darf (rechtmäßiger Rufnummerninhaber).

In diesem Sonderfall kann auf die digitale Signatur verzichtet werden und auf die Authentifizierung im Rahmen des Anmeldeprozesses zurückgegriffen werden. Das geht nur, wenn kein weiterer Netzbetreiber in der Servicekette ist. Die Software beim A-Teilnehmer könnte in diesem Fall entfallen. Dem Netzbetreiber muss aber die Information vorliegen, welche Rufnummern der jeweilige Kunde aufsetzen darf.

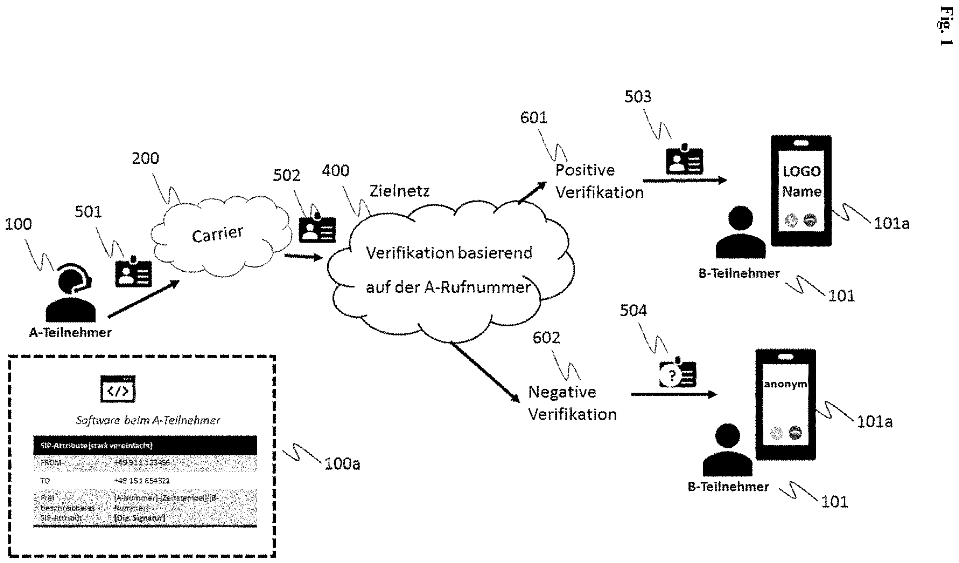

Fig. 1 zeigt eine schematische Darstellung des Verfahrensablauf in einer Ausführungsform der Erfindung ohne Transitnetzwerk. Diese Ausführungsform entspricht der sekundären Ausführungsform wie oben diskutiert.

Der A-Teilnehmer 100 verfügt über eine Software 100a, vorzugsweise ausgeführt in seinem Endgerät und/oder der Telefonanlage. Der Ausgehende Anruf wird 501 wird mit einem SIP-Attribut beschrieben. Das SIP Attribut wird vorzugsweise in einem Session Border Controller, SBC, beschrieben. Das SIP-Attribut ist vorzugsweise ein frei beschreibbares SIP-Attribut. In einer bevorzugten Ausführungsform wird das Attribut Identity und/oder UserAgent beschrieben. Alternativ oder ergänzend kann auch CNAM verwendet werden.

In der Darstellung der Software wird auf eine stark vereinfachte Darstellung der Software zurückgegriffen. Insbesondere werden nur einige der Anruffelder dargestellt, was nicht als Eingrenzung zu verstehen ist. Kern der Darstellung ist das zusätzliche Beschreiben eines oder mehrerer Felder mit Informationen. Die Informationen enthalten vorzugsweise eines oder mehrere von die A-Nummer einen Zeitstempel, die B-Nummer und/oder eine digitale Signatur. Wie oben beschrieben kann die gesamte Information oder Teile davon verschlüsselt und/oder verhasht sein.

Der Anruf wird im Carrier-Netz 200 weitergeleitet. Das Carrier-Netz verändert das SIP-Attribut des Anrufs 502 nicht.

Im Vergleich zu STIR/SHAKEN wird dort ebenfalls Identity Attribut genutzt, es wird jedoch vom Netzbetreiber des A-Teilnehmers beschrieben und das kryptografische Verfahren ist anders.

Im Zielnetz 400, vorzugsweise im Kernnetz, ist eine Komponente ausgeführt, die konfiguriert ist, eine Verifikation durchzuführen. Für die Verifikation wird vorzugsweise eine digitale Signatur, ein OTP, oder ein Hash-Wert verwendet.

Bei positiver Verifikation 601 wird das SIP-Attribut im Anruf 503 nicht verändert, d.h. die Rufnummer wird an den B-Teilnehmer 101 übertragen. Basierend auf der übertragenen Rufnummer wird dann der Anruf im Endgerät 101a des B-Teilnehmers angereichert, vorzugsweise wird ein Name und oder ein Logo angereichert.

Bei negativer Verifikation 602 wird das SIP-Attribut im Anruf 504 verändert, d.h. die Rufnummer wird nicht an den B-Teilnehmer 101 übertragen. Vorzugsweise wird dazu das CLIR Merkmal verwendet. Entsprechend wird dann der Anruf im Endgerät 101a des B-Teilnehmers nicht angereichert und ein unbekannter Anrufer wird angezeigt.

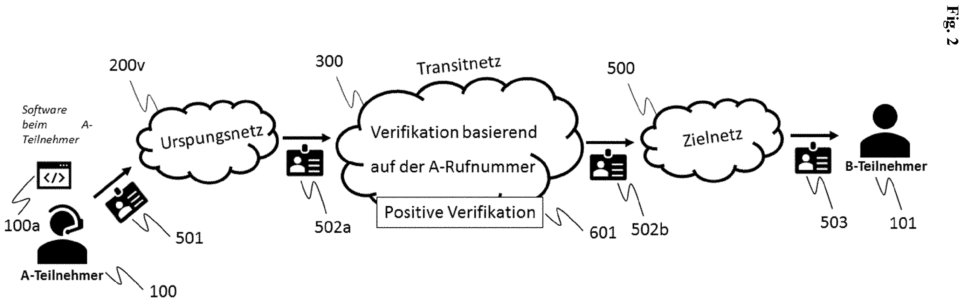

Fig. 2 zeigt eine schematische Darstellung des Verfahrensablauf in einer Ausführungsform der Erfindung mit Transitnetzwerk und positiver Verifikation. In dieser Ausführungsform findet die Verifikation nicht im Carrier-Netz 200 und nicht im Zielnetz 500 statt. Stattdessen findet die Verifikation des SIP-Attributes in einem Transit-Netz 300 statt.

Der A-Teilnehmer 100 verfügt über eine Software 100a, vorzugsweise ausgeführt in seinem Endgerät und/oder der Telefonanlage. Im Vergleich zur Fig. 1 ist die Software noch weiter vereinfacht, nur als Symbol, dargestellt. Es gelten aber bezüglich der Software alle voranstehenden bzw. nachfolgenden Beschreibungen. Der Ausgehende Anruf 501 wird mit einem SIP-Attribut beschrieben. Der Anruf wird im Carrier-Netz 200 weitergeleitet. Das Carrier-Netz 200 verändert das SIP-Attribut des Anrufs 502a nicht.

Im Transitnetz 300, vorzugsweise im Kernnetz, ist eine Komponente ausgeführt, die konfiguriert ist, eine Verifikation durchzuführen. Für die Verifikation wird vorzugsweise eine digitale Signatur, ein OTP oder ein Hash-Wert verwendet. Alternativ oder ergänzend kann die Verifikation auch im Zielnetz durchgeführt werden.

Bei positiver Verifikation 601 wird das SIP-Attribut im Anruf 502b nicht verändert, d.h. die Rufnummer wird an das Zielnetz 500 und an den B-Teilnehmer 101 übertragen. Basierend auf der übertragenen Rufnummer wird dann der Anruf im Endgerät 101a des B-Teilnehmers angereichert, vorzugsweise wird ein Name und oder ein Logo angezeigt (nicht dargestellt).

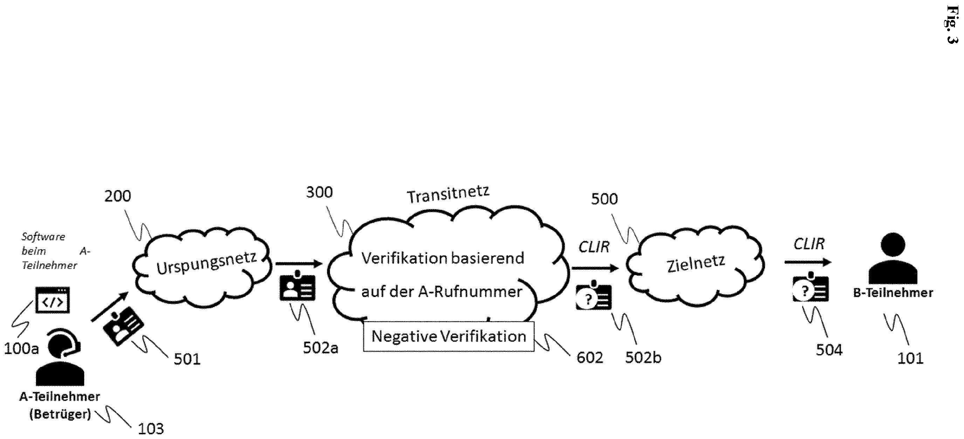

Fig. 3 zeigt eine schematische Darstellung des Verfahrensablauf in einer Ausführungsform der Erfindung mit Transitnetzwerk und negativer Verifikation. Mit anderen Worten, der Anrufer 103 ist ein nicht berechtigter A-Teilnehmer 103, d.h. nicht zum Senden der A-Rufnummer berechtigt.

Bei negativer Verifikation 602 im Transitnetzwerk wird das SIP-Attribut im Anruf 502b verändert, d.h. die Rufnummer wird nicht an das Zielnetzwerk 500 übertragen und auch vom Zielnetzwerk 500 nicht an den B-Teilnehmer 101 übertragen 503, vorzugsweise wird dazu das CLIR Merkmal verwendet 504.

Alternativ oder ergänzend kann die Verifikation auch im Zielnetz durchgeführt werden.

Entsprechend wird dann der Anruf im Endgerät 101a des B-Teilnehmers nicht angereichert und ein unbekannter Anrufer wird angezeigt (nicht dargestellt).

Weitere Ausführungsformen der Erfindung betreffen den SMS-Versand. Um eine fälschliche Anreicherung von SMS-Nachrichten mit gespooften A-Rufnummern zu verhindern, sollte auch hier eine Verifikation der Rufnummer vorgenommen werden. Die beschriebenen Ausführungsformen können entsprechend angewendet werden.

Alternativ und ergänzend kann eine Erweiterung des Betriebssystems genutzt werden, welche sich nur auf die Anreicherung von Anrufen beschränkt. Das Unterdrücken der Rufnummer ohne Anreicherung ist unabhängig vom SMS-Dienst möglich.

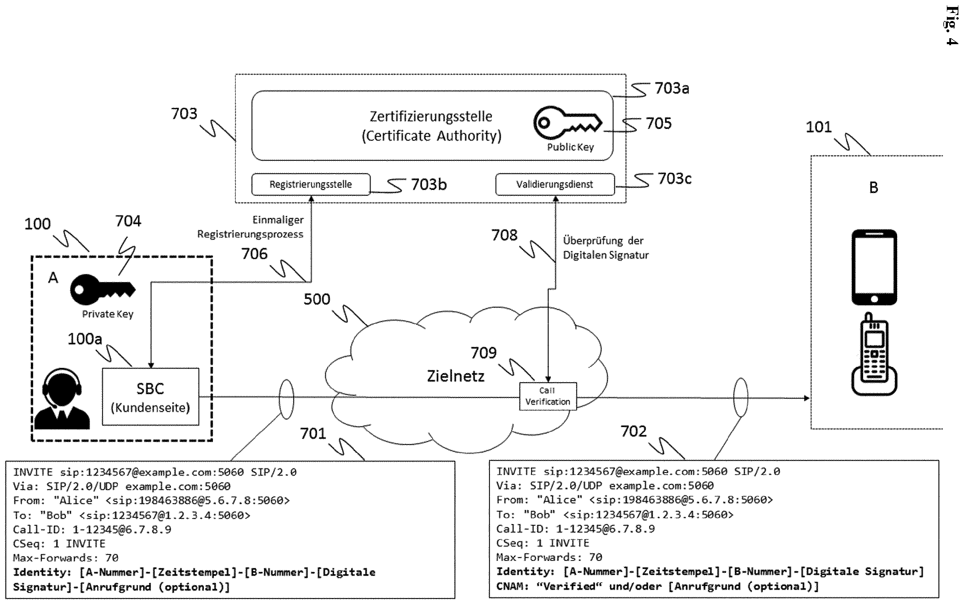

Fig. 4 zeigt eine Darstellung des Verfahrensablaufs als Blockbild. Grundsätzlich sind für alle gleich bezeichneten Elemente die voranstehende Beschreibung anzuwenden. Zusätzlich werden nachfolgend die weiteren Elemente beschrieben.

Bei dem A-Teilnehmer 100, wird die Software 100a vorzugsweise in einer SBC ausgeführt. Der A-Teilnehmer verfügt über einen privaten Schlüssel 704. Der private Schlüssel 704 ist nur im Besitz des A-Teilnehmers und wird für die Nutzung der Digitalen Signatur benötigt.

Zunächst erfolgt eine einmalige Registrierung 706 des A-Teilnehmers bei einer erfindungsgemäßen Public-Key-Infrastruktur 703. Alternativ oder ergänzend hat die Registrierung nur eine begrenzte Gültigkeit und muss regelmäßigen Abständen, vorzugsweise jährlich, wiederholt werden.

Die Public-Key-Infrastruktur 703 ist ein System, welches konfiguriert ist, digitale Zertifikate auszustellen, zu verteilen und/oder zu prüfen. Die Public-Key-Infrastruktur 703 ist vorzugsweise extern oder beim Zielnetzbetreiber ausgeführt.

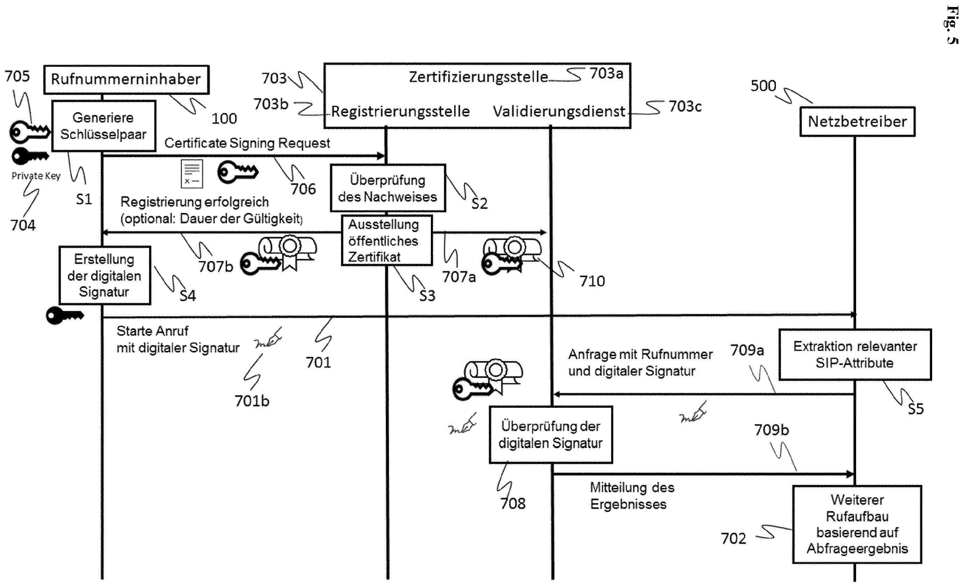

Die Public-Key-Infrastruktur 703 weist eine Registrierungsstelle 703b auf. Bei der Registrierungsstelle 703b wird der Registrierungsprozess 706 verarbeitet. Mit anderen Worten bei der Registrierungsstelle 703b beantragt der A-Teilnehmer ein Zertifikat. Die Registrierungsstelle 703b prüft die Richtigkeit der Daten im Zertifikatsantrag und genehmigt diesen gegebenenfalls. Die Informationen aus dem genehmigten Antrag können dann durch die Zertifizierungsstelle CA, Certification Authority, signiert werden, wobei das gewünschte Zertifikat entsteht. Dies wird in Bezug auf Fig. 5 detailliert beschrieben.

Die einmalige Überprüfung des A-Teilnehmers bestätigt, dass er der rechtmäßige Rufnummerninhaber ist und alle Anrufe signieren kann.

Die Public-Key-Infrastruktur 703 weist ferner eine Zertifizierungsstelle 703a auf, welche ein CA-Zertifikat bereitstellt und konfiguriert ist, die Signatur von Zertifikatsanträgen durchzuführen.

Ein ausgehender Anruf des A-Teilnehmers wird dann wie in 701 gezeigt beschrieben. Neben den üblichen, hier beispielhaft in den ersten 7 Zeilen dargestellten Informationen, wird zusätzlich ein oder mehrere frei beschreibbare Felder mit Informationen beschrieben. Vorzugsweise das Identity Feld. Die Informationen umfassen vorzugsweise die A-Nummer, einen Zeitstempel, die B-Nummer, eine digitale Signatur und/oder optional einen Anrufgrund.

Der ausgehende Anruf wird spätestens im Zielnetz 500, optional auch an einer anderen Stelle der Service-Kette, in einer Call-Verification Unit 709 überprüft. Zur Überprüfung wird auf einen Validierungsdienst 703c in der Public-Key-Infrastruktur 703 zugegriffen.

Der Validierungsdienst 703c ist eingerichtet, um die Überprüfung von Zertifikaten in Echtzeit durchzuführen. Mit anderen Worten eine Überprüfung der Digitalen Signatur bei jedem Anruf durchzuführen. Der Validierungsdienst 703c kann alternativ auch beim Zielnetzbetreiber und/oder im Zielnetz 500 ausgeführt sein.

Die Überprüfung der Gütigkeit der digitalen Signatur erfolgt basierend auf einem öffentlicher Schlüssel 705, der im Besitz des Validierungsdienstes und/oder des Zielnetzbetreibers ist.

Nach erfolgter Überprüfung wird dem eingehenden Anruf 702 weitere Information angereichert. Dies ist wieder vereinfacht dargestellt. Zeilen 1 bis 7 enthalten die üblichen Anrufinformationen. Zeile 8 enthält die vom A-Teilnehmer geschriebene Information. Zeile 9 enthält die angereicherte Information. Die angereicherte Information umfasst vorzugsweise des Überprüfungsergebnis. Weiter bevorzugt wird die angereicherte Information in das CNAM Feld geschrieben. Die Anreicherung ist optional, da auch eine Unterdrückung der Rufnummer (negative Verifikation) oder keine Modifikation (positive Verifikation) möglich wäre (nicht dargestellt).

Beim B-Teilnehmer 101 wird die angereicherte Information verarbeitet und/oder zur Anzeige gebracht.

Fig. 5 zeigt eine Darstellung des Verfahrensablaufs einer Ausführungsform als Halbschaltbild. Alle gleich bezeichneten Elemente entsprechen den Elementen wie voranstehend beschrieben. Zusätzlich werden nachfolgend die Elemente einer Ausführungsform beschrieben, die eine digitale Signatur verwendet.

Registrierungsprozess mit den Schritten S1 bis S3 wird einmalig vor dem ersten Anruf ausgeführt. Falls die Registrierung eine begrenzte Gültigkeit hat, wird der Prozess regelmäßig wiederholt.

Der Rufnummerninhaber, auch als Antragssteller oder A-Teilnehmer bezeichnet, erzeugt in Schritt S1 ein zufälliges Schlüsselpaar, bestehend aus einem privaten Schlüssel (Private Key) 704 und einem öffentlichen Schlüssel (Public Key) 705. Anschließend initiiert der Antragssteller einen Certificate Signing Request 706. Der private Schlüssel verbleibt nur im Besitz des A-Teilnehmers und wird später für die Nutzung der Digitalen Signatur benötigt.

Im Certificate Signing Request 706 wird der Public Key 705, ein Identitätsnachweis und/oder ein Nachweis über das Nutzungsrecht an der Rufnummer über einen sicheren Kanal an die Registrierungsstelle 703b übermittelt. Vorzugsweise in Form eines elektronischen Formulars mit Antragsdaten.

Im Schritt S2 überprüft die Registrierungsstelle 703 die Angaben. Bei positivem Prüfungsergebnis wird dieses Ergebnis an die Zertifizierungsstelle 703a weitergegeben und diese stellt 707b dem Antragsteller ein neues öffentliches Zertifikat 710 aus, indem das Zertifikat mithilfe des privaten Schlüssels der Zertifizierungsstelle, CA, signiert wird. Alternativ oder ergänzend wird die Gültigkeit der Registrierung übermittelt.

Mit anderen Worten, die Registrierungsstelle überprüft die Anträge und die Zertifizierungsstelle "setzt die Unterschrift darunter" also signiert den Public Key des Antragstellers mit dem Private Key der Zertifizierungsstelle, CA.

Bei negativer Prüfung wird dem Antragsteller eine Fehlermeldung zurückgegeben und kein Zertifikat ausgestellt (nicht abgebildet).

Das Zertifikat 710 hat eine begrenzte Gültigkeitsdauer und umfasst neben dem Public Key mindestens die Rufnummer und den Namen des Antragsstellers, optional weitere Attribute wie Organisation oder weitere Angaben.

Die Registrierungsstelle 703b stellt das öffentliche Zertifikat 710 dem Validierungsdienst 703c bereit 707a, optional auch direkt dem Netzbetreiber 500.

Anschließend kann der Rufaufbau durchgeführt werden. Der A-Teilnehmer verwendet ein zuvor abgestimmtes kryptografisches Verfahren. Das kryptografische Verfahren kann eine digitale Signatur und/oder ein Einmalpasswort, OTP, umfassen.

Im Schritt S4 wird, zum Starten des Anrufs, vom Anrufer eine digitalen Signatur 701b erstellt und in ein SIP-Attribut codiert.

Die digitale Signatur 701b umfasst vorzugsweise mindestens eines von: die A-Rufnummer, die B-Rufnummer und einen Zeitstempel des Anrufs. In einer bevorzugten Ausführungsform der Erfindung wird die Kombination aus A-Rufnummer, B-Rufnummer und Zeitstempel digital signiert. Dadurch ist die Signatur "einzigartig". Für die Erstellung der digitalen Signatur wird der Private Key verwendet.

Anschließend überprüft der Netzbetreiber 500, bevorzugt der Zielnetzbetreiber wie zuvor beschrieben, die digitale Signatur. Dazu werden im Schritt S5 die relevanten SIP Attribute extrahiert und einen Request 709a an den Validierungsdienst 703c gestartet.

Der Request 709a beinhaltet mindestens die zur Anzeige zu bringende A-Rufnummer (aus dem FROM Field) und die digitale Signatur. Vorzugsweise beinhaltet der Request: A-Rufnummer, B-Rufnummer, Zeitstempel, und die digitale Signatur.

Der Validierungsdienst 703c prüft im Schritt 708 die Gültigkeit der digitalen Signatur, vorzugsweise auf Basis der A-Rufnummer, der B-Rufnummer und des Zeitstempel. Wie bereits beschrieben, kann die Prüfung auch beim Netzbetreiber durchgeführt werden (nicht dargestellt).

Der Validierungsdienst 703c meldet Ergebnis 709b der Prüfung an den Netzbetreiber 500. Der Netzbetreiber führt den weiteren Rufaufbau, basierend auf dem Ergebnis 709b, durch 702.

In einer Ausführungsform der Erfindung erfolgt der oben beschriebene Certificate Signing Request nach Requests for Comments, RFC, 2986. Alternativ oder ergänzend zu der Ausstellung des Zertifikats, kann auch eine Zertifikatssperrliste implementiert werden. Ein möglicher Grund wäre die Übertragung der Rechte an einer Rufnummer an eine andere Person. Das Vorgehen ist nicht dargestellt und erfolgt vorzugsweise nach RFC 5280.

In einer Ausführungsform der Erfindung ist die Public-Key-Infrastruktur, PKI, 703 vorzugsweise nach RFC 3647 aufgebaut. Das RFC definiert eine Registration authority, d.g. Registrierungsstelle 703b, und beschreibt die Ausstellung des öffentlichen Zertifikats durch eine Issuing certification authority. Die Darstellungen auf in Fig. 4 und Fig. 5 zeigen eine stark vereinfachte PKI, welche aber analog zum genannten RFC aufgebaut ist.

Eine Erweiterung der Ausführungsform gemäß des RFCs wurde durch den Validierungsdienst 703c vorgenommen, welcher in der Ausführungsform von Fig. 5 direkt in die PKI aufgenommen ist. Ein Validierungsdienst ist ein Dienstleister, der die Gültigkeit eines Zertifikats aus einer PKI überprüft. Nach dem RFC stellt die PKI lediglich ein Repository für einen (externen) Validierungsdienst bereit, vgl. "4.2. Publication and Repository Responsibilities" in RFC 3647.

Der erfindungsgemäße Validierungsdienst, primär als Bestandteil der PKI, hat Zugriff auf das Repository und kann in einer alternativen Ausführungsform auch extern betrieben werden. Die oben genannten RFC 2986, RFC 5280, und RFC 3647 wurden dem Patentamt bei Einreichung zur Verfügung gestellt.

## Patentansprüche

1. Verfahren zur netzzentrischen Verifizierung einer Rufnummer in einem Telefonnetz,
wobei eine Anrufereinheit eine erste Rufnummer sendet und ein Session Initiation Protocol, SIP,-Attribut mit einer Identitätsinformation beschreibt,
wobei eine Komponente des Telefonnetzes die gesendete erste Rufnummer auf Basis der Identitätsinformation überprüft, und
falls das Überprüfungsergebnis positiv ist, die Übertragung der ersten Rufnummer im Telefonnetz zulässt; und
falls das Überprüfungsergebnis negativ ist, die Übertragung der ersten Rufnummer im Telefonnetz unterdrückt.

2. Verfahren nach Anspruch 1, wobei zum Unterdrücken der Übertragung der ersten Rufnummer das Calling Line Identification Restriction, CLIR,-Merkmal verwendet wird.

3. Verfahren nach Anspruch 1 oder 2, wobei das SIP-Attribut vorzugsweise ein Identity Attribut ist, oder wobei das SIP-Attribut ein UserAgent oder Calling Name Delivery, CNAM, Attribut ist.

4. Verfahren nach einem der Ansprüche 1 bis 3,
wobei die Überprüfung der gesendeten ersten Rufnummer auf Basis der Identitätsinformation auf einem zuvor abgestimmten kryptografischen Verfahren beruht, und
wobei das kryptografische Verfahren auf mindestens einem von:
ein Einmalpasswort, eine digitale Signatur, oder einen Hash-Wert basiert.

5. Verfahren nach einem der Ansprüche 1 bis 4, wobei, falls das Überprüfungsergebnis negativ ist, eine Warnung im Calling Name Delivery, CNAM, Attribut angereichert wird; und/oder
wobei, falls das Überprüfungsergebnis positiv ist, eine Information im Calling Name Delivery, CNAM, Attribut angereichert wird.

6. Verfahren zur Anreicherung eines Anrufs,
wobei eine netzzentrische Verifizierung einer Rufnummer gemäß einem der Ansprüche 1 bis 5 durchgeführt wird,
wobei ein zusätzliches Telefonbuch lokal, vorzugsweise offline, im Endgerät und/oder einer Telekommunikationsanlage des Angerufenen hinterlegt ist, und
wobei bei positiver Verifikation die Anreicherung auf Basis eines Eintrags aus dem zusätzlichen Telefonbuch durchgeführt wird.

7. Verfahren nach Anspruch 6,
wobei das zusätzliche Telefonbuch in einer Applikation, App, mit Telefonbuchfunktion hinterlegt ist, welche vorzugsweise eine vom Netzwerkbetreiber zur Verfügung gestellte App ist, und
wobei eine Erweiterung des Betriebssystems des Endgeräts und/oder der Telefonanlage konfiguriert ist, auf Basis eines Eintrags aus dem zusätzlichen Telefonbuch anzureichern.

8. System zur netzzentrischen Verifizierung einer Rufnummer in einem Telefonnetz,
wobei eine Anrufereinheit konfiguriert ist, eine erste Rufnummer zu senden und ein Session Initiation Protocol, SIP,-Attribut mit einer Identitätsinformation zu beschreiben,
wobei eine Komponente des Telefonnetzes konfiguriert ist, die gesendete erste Rufnummer auf Basis der Identitätsinformation zu überprüfen, und
falls das Überprüfungsergebnis positiv ist, die Übertragung der ersten Rufnummer im Telefonnetz zuzulassen; und
falls das Überprüfungsergebnis negativ ist, die Übertragung der ersten Rufnummer im Telefonnetz zu unterdrücken.

9. Vorrichtung zur Datenverarbeitung, umfassend Mittel zur Ausführung der Schritte des Verfahrens nach einem Ansprüche 1 bis 7 in einer Anrufereinheit.

10. Vorrichtung zur Datenverarbeitung, umfassend Mittel zur Ausführung der Schritte des Verfahrens nach einem Ansprüche 1 bis 7 in einer Komponente des Telefonnetzes.

11. Computerprogramm, umfassend Befehle, die bei der Ausführung des Programms durch einen Computer diesen veranlassen, das Verfahren nach einer der Ansprüche 1 bis 7 in einer Anrufereinheit oder in einer Komponente des Telefonnetzes auszuführen.

12. Computerlesbarer Datenträger, auf dem das Computerprogramm nach Anspruch 11 gespeichert ist.

## Claims

1. A method for network-centric verification of a telephone number in a telephone network,
wherein a caller unit sends a first telephone number and writes a Session Initiation Protocol, SIP, attribute with identity information,
wherein a component of the telephone network checks the sent first telephone number on the basis of the identity information, and
if the result of the check is positive, allows the transmission of the first telephone number in the telephone network; and
if the result of the check is negative, suppresses the transmission of the first telephone number in the telephone network.

2. The method according to claim 1, wherein the Calling Line Identification Restriction, CLIR, feature is used to suppress the transmission of the first telephone number.

3. The method according to claim 1 or 2, wherein the SIP attribute is preferably an identity attribute, or wherein the SIP attribute is a UserAgent or Calling Name Delivery, CNAM, attribute.

4. The method according to any one of claims 1 to 3,
wherein the checking of the sent first telephone number on the basis of the identity information is based on a previously agreed cryptographic method, and
wherein the cryptographic method is based on at least one of:
a one-time password, a digital signature, or a hash value.

5. The method according to any one of claims 1 to 4, wherein, if the result of the check is negative, a warning is enriched in the Calling Name Delivery, CNAM, attribute; and/or wherein, if the result of the check is positive, information is enriched in the Calling Name Delivery, CNAM, attribute.

6. A method for enriching a call,
wherein a network-centric verification of a telephone number is performed according to any one of claims 1 to 5,
wherein an additional telephone book is stored locally, preferably offline, in the terminal and/or a telecommunications system of the called party, and
wherein, if verification is positive, enrichment is carried out on the basis of an entry from the additional telephone book.

7. The method according to claim 6,
wherein the additional telephone book is stored in an application, app, with a telephone book function, which is preferably an app provided by the network operator, and
wherein an extension of the operating system of the terminal and/or the telephone system is configured to enrich on the basis of an entry from the additional telephone book.

8. A system for network-centric verification of a telephone number in a telephone network,
wherein a caller unit is configured to send a first telephone number and to write a Session Initiation Protocol, SIP, attribute with identity information,
wherein a component of the telephone network is configured to check the sent first telephone number on the basis of the identity information, and
if the result of the check is positive, to allow the transmission of the first telephone number in the telephone network; and
if the result of the check is negative, to suppress the transmission of the first telephone number in the telephone network.

9. A device for data processing, comprising means for carrying out the steps of the method according to any one of claims 1 to 7 in a caller unit.

10. A device for data processing, comprising means for carrying out the steps of the method according to any one of claims 1 to 7 in a component of the telephone network.

11. A computer program comprising instructions which, when the program is executed by a computer, cause the computer to execute the method according to any one of claims 1 to 7 in a caller unit or in a component of the telephone network.

12. A computer-readable data carrier on which the computer program according to claim 11 is stored.

## Revendications

1. Procédé de vérification centrée réseau d'un numéro d'appel dans un réseau téléphonique, où une unité d'appel envoie un premier numéro d'appel et décrit un attribut de protocole d'initiation de session, SIP, avec une information d'identité,
où un composant du réseau téléphonique vérifie le premier numéro d'appel envoyé sur la base des informations d'identité, et où,
si le résultat de la vérification est positif, autorise la transmission du premier numéro d'appel dans le réseau téléphonique ; et,
si le résultat de la vérification est négatif, bloque la transmission du premier numéro d'appel dans le réseau téléphonique.

2. Procédé selon la revendication 1, où la caractéristique restriction d'identification de ligne appelante, CLIR, est utilisée pour bloquer la transmission du premier numéro de téléphone.

3. Procédé selon la revendication 1 ou la revendication 2, où l'attribut SIP est de préférence un attribut d'identité, ou où l'attribut SIP est un attribut d'indication d'agent utilisateur ou de nom du demandeur, CNAM.

4. Procédé selon l'une des revendications 1 à 3, où
la vérification du premier numéro d'appel envoyé sur la base des informations d'identité repose sur un procédé cryptographique préalablement convenu, et
où le procédé cryptographique est basé sur au moins un élément parmi : un mot de passe à usage unique, une signature numérique, ou une valeur de hachage.

5. Procédé selon l'une des revendications 1 à 4, où, si le résultat de la vérification est négatif, un avertissement est ajouté dans l'attribut d'indication de nom du demandeur, CNAM ; et/ou
où, si le résultat de la vérification est positif, une information est ajoutée dans l'attribut Calling Name Delivery, CNAM.

6. Procédé d'enrichissement d'un appel,
où une vérification centrée réseau d'un numéro d'appel selon l'une des revendications 1 à 5 est exécutée,
où un annuaire téléphonique supplémentaire est enregistré localement, de préférence hors ligne, dans le terminal et/ou une installation de télécommunications de l'appelé, et
où, en cas de vérification positive, l'enrichissement est réalisé sur la base d'une entrée de l'annuaire téléphonique supplémentaire.

7. Procédé selon la revendication 6,
où l'annuaire téléphonique supplémentaire est enregistré dans une application, App, avec fonction d'annuaire téléphonique, laquelle est de préférence une application mise à disposition par l'exploitant du réseau, et
où une extension du système d'exploitation du terminal et/ou de l'installation téléphonique est configurée pour enrichissement sur la base d'une entrée de l'annuaire téléphonique supplémentaire.

8. Système de vérification centrée réseau d'un numéro d'appel dans un réseau téléphonique, où
une unité d'appel est configurée pour envoyer un premier numéro d'appel et pour décrire un attribut de protocole d'initiation de session, SIP, avec une information d'identité,
où un composant du réseau téléphonique est configuré pour vérifier le premier numéro d'appel envoyé sur la base des informations d'identité, et,
si le résultat de la vérification est positif, autoriser la transmission du premier numéro d'appel dans le réseau téléphonique ; et
si le résultat de la vérification est négatif, bloquer la transmission du premier numéro d'appel dans le réseau téléphonique.

9. Dispositif de traitement de données comprenant des moyens de mise en oeuvre des étapes du procédé selon l'une des revendications 1 à 7 dans une unité d'appel.

10. Dispositif de traitement de données comprenant des moyens de mise en oeuvre des étapes du procédé selon l'une des revendications 1 à 7 dans un composant du réseau téléphonique.

11. Programme d'ordinateur comprenant des instructions qui, lorsque le programme est exécuté par un ordinateur, entraînent la mise en oeuvre par celui-ci du procédé selon l'une des revendications 1 à 7 dans une unité d'appel ou dans un composant du réseau téléphonique.

12. Support de données lisible par ordinateur sur lequel est stocké le programme d'ordinateur selon la revendication 11.
